# EUROPÄISCHE PATENTANMELDUNG

(11) **EP 4 477 046 A1**
(43) Veröffentlichungstag der Anmeldung: **18.12.2024**
(21) Anmeldenummer: 24180961.5
(22) Anmeldetag: 10.06.2024
(51) Int. Cl.: A01C 17/00, A01C 23/00, A01M 7/00

(54) **TRAGSTRUKTUR FÜR EIN LANDWIRTSCHAFTLICHES ARBEITSGERÄT ZUR AUSBRINGUNG EINES LANDWIRTSCHAFTLICHEN GUTS AUF EINEM BODEN, ARBEITSGERÄT MIT EINER TRAGSTRUKTUR UND VERFAHREN ZUM AUSBRINGEN EINES LANDWIRTSCHAFTLICHEN GUTS**

(30) Priorität: 15.06.2023 DE 102023115652
(71) Anmelder: HORSCH LEEB Application Systems GmbH, 94405 Landau an der Isar (DE)
(72) Erfinder: SCHMALHOFER, Armin, 94405 Landau an der Isar (DE)
(74) Vertreter: v. Bezold & Partner Patentanwälte - PartG mbB

(57) **Zusammenfassung**

Es wird eine Tragstruktur (100) für ein landwirtschaftliches Arbeitsgerät (200) zur Ausbringung eines landwirtschaftlichen Guts (G) auf einem Boden (B) offenbart, umfassend: einen Kopplungsrahmen (110), welcher zur Koppelung an ein landwirtschaftliches Trägerfahrzeug (300) konfiguriert ist, einen Montagerahmen (120), welcher zur Montage an das Arbeitsgerät (200) konfiguriert ist, wobei der Kopplungsrahmen (110) und der Montagerahmen (120) mittels einer Lagereinrichtung (130) relativ zueinander beweglich gekoppelt sind, und wobei die Tragstruktur (100) eine Verstelleinrichtung (140) umfasst, welche zur Einstellung einer definierten Lage des Montagerahmens (120) zu dem Kopplungsrahmen (110) und/oder zu dem Boden (B) in Abhängigkeit von zumindest einem Parameter betätigbar konfiguriert ist. Es wird ferner ein landwirtschaftliches Arbeitsgerät (200) mit einer Tragstruktur (100), sowie ein Verfahren zum Ausbringen eines landwirtschaftlichen Guts (G) auf einem Boden (B) mittels einem landwirtschaftlichen Arbeitsgerät (200) offenbart.

## Beschreibung

Die vorliegende Erfindung liegt auf dem Gebiet der Landtechnik und betrifft eine Tragstruktur für ein landwirtschaftliches Arbeitsgerät zur Ausbringung eines landwirtschaftlichen Guts auf einem Boden. Die vorliegende Erfindung betrifft ferner ein landwirtschaftliches Arbeitsgerät mit einer Tragstruktur sowie ein Verfahren zum Ausbringen eines landwirtschaftlichen Guts auf einem Boden mittels einem landwirtschaftlichen Arbeitsgerät.

Zur Deckung eines Nährstoffbedarfs von Pflanzen auf einem landwirtschaftlich genutzten Boden erfolgt zusätzlich oder anstatt der Ausbringung organischer Düngemittel, beispielsweise in Form von Gülle oder Stallmist, häufig eine Ausbringung mineralischer Düngemittel (Mineraldünger) in Granulatform. Um den Boden mit einem granularen Düngemittel zu versorgen, kommt häufig ein so genannter Schleuderstreuer in Verbindung mit einem landwirtschaftlichen Zugfahrzeug zum Einsatz. Der Schleudersteuer kann als so genannter Scheibenstreuer oder als so genannter Pendelrohrstreuer ausgebildet sein. Der Schleuderstreuer wird dabei nicht von dem Zugfahrzeug gezogen, sondern ist in der Regel über den so genannten Dreipunkt-Kraftheber an das Zugfahrzeug mehr oder weniger starr gekoppelt und vollzieht somit Nick-, Wank- und/oder Rollbewegungen des Zugfahrzeugs in entsprechend übertragener Form mitsamt dem Zugfahrzeug. Dies trifft beispielsweise auch für Feldspritzen zur Ausbringung von Pflanzenschutzmitteln zu, welche über den Dreipunkt-Kraftheber an das Zugfahrzeug mehr oder weniger starr gekoppelt sind.

Ein sich hieraus ergebendes Problem für die Ausbringung des Düngemittels durch den Schleuderstreuer ist beispielsweise unter anderem die Abhängigkeit der Breite des ausgebrachten Düngemittels auf dem Boden (Arbeitsbreite) und somit des erzeugten Streubilds von der Beschaffenheit und/oder Lage der Fahrbahn, zum Beispiel der Fahrgasse.

Ferner kann sich beim Einsatz eines Schleuderstreuers durch eine ungleichmäßige Ballastierung des Vorratsbehälters mit Düngemittel und somit durch eine ungleichmäßige Verteilung von Düngemittel innerhalb des Vorratsbehälters der so genannte Auftreffpunkt auf die jeweilige Schleuderscheibe ändern, was sich ebenfalls auf das erzeugte Streubild auswirkt.

Um den oben genannten Problemen entgegenzuwirken, sind aus der Patentliteratur des Stands der Technik verschiedene Ansätze bekannt.

Aus der veröffentlichten europäischen Patentanmeldung Nr. EP 3 616 490 A1 ist ein Verfahren zum Erfassen des Einflusses der Neigung eines landwirtschaftlichen Streugeräts auf die Streugutverteilung bekannt, wobei Ausbringinformationen zu einem Streuvorgang des landwirtschaftlichen Streugeräts von einer Auswerteeinrichtung empfangen werden. Ferner erfolgt ein Ermitteln eines von der Neigung des Streugeräts abhängigen Zusammenhangs zwischen einem Aufgabepunkt des Streuguts auf eine Verteilscheibe des Streugeräts und einer Streugutverteilung durch die Auswerteeinrichtung auf Grundlage der empfangenen Ausbringinformationen.

Ferner ist in der veröffentlichten Patentanmeldung Nr. DE 10 2020 119 431 A1 eine Streumaschine zum Ausbringen von Streugut mittels einer Streuscheibe zum Abwerfen des Streuguts auf eine landwirtschaftliche Nutzfläche bekannt, wobei die Aufgabe des Streuguts auf die Streuscheibe mittels einer Aufgabeeinrichtung einstellbar ist. Mittels einer Erfassungseinrichtung ist eine aktuelle Neigung der Streumaschine während einer Streugutausbringung sensorisch erfassbar. Eine Steuerungseinrichtung ist dazu eingerichtet, den Einfluss der Neigung der Streumaschine auf die Streugutausbringung zu ermitteln und zum Ausgleichen des Einflusses der Neigung der Streumaschine einen Steuerungsbefehl zu erzeugen, um einen Dreipunkt-Kraftheber als Kupplungsvorrichtung des Trägerfahrzeugs zu verstellen, an welcher die Streumaschine angebaut ist.

Bei den aus dem Stand der Technik bekannten Ansätzen wird beispielsweise infolge einer sich verändernden Neigung des Schleuderstreuers versucht, entweder den Auftreffpunkt des Streuguts auf die Schleuderscheibe zu ändern und/oder die Drehzahl der Schleuderscheibe zu variieren, wobei beispielsweise eine Referenzgröße für die Beeinflussung des Streubildes nur mit vergleichsweise großem Aufwand oder auch nur annähernd geschätzt realisiert wird.

Es ist eine Aufgabe der vorliegenden Erfindung, eine Tragstruktur für ein landwirtschaftliches Arbeitsgerät zur Ausbringung eines landwirtschaftlichen Guts auf einem Boden, sowie ein landwirtschaftliches Arbeitsgerät mit einer Tragstruktur bereitzustellen, wobei vor allem in einem Betriebszustand Bewegungen des Zugsfahrzeugs auf das Arbeitsgerät, vorzugsweise Neigungsbewegungen, ausgeglichen werden können. Ferner ist es eine Aufgabe der vorliegenden Erfindung, ein Verfahren zum Ausbringen eines landwirtschaftlichen Guts auf einem Boden mittels einem landwirtschaftlichen Arbeitsgerät bereitzustellen, welches vor allem hinsichtlich Effizienz und Verteilung des landwirtschaftlichen Guts auf den Boden verbessert ist.

Die Aufgabe wird durch die Merkmale der Ansprüche 1, 12 und 13 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt eine Tragstruktur für ein landwirtschaftliches Arbeitsgerät zur Ausbringung eines landwirtschaftlichen Guts auf einem Boden, umfassend: einen Kopplungsrahmen, welcher zur Koppelung an ein landwirtschaftliches Trägerfahrzeug konfiguriert ist; einen Montagerahmen, welcher zur Montage an das Arbeitsgerät konfiguriert ist; wobei der Kopplungsrahmen und der Montagerahmen mittels einer Lagereinrichtung relativ zueinander beweglich gekoppelt sind, und wobei die Tragstruktur eine Verstelleinrichtung umfasst, welche zur Einstellung einer definierten Lage des Montagerahmens zu dem und/oder an dem Kopplungsrahmen und/oder zu dem Boden und/oder zu der Horizontalen in Abhängigkeit von zumindest einem Parameter betätigbar konfiguriert ist.

Mit der Tragstruktur gemäß der vorliegenden Erfindung ist es beispielsweise möglich, ein landwirtschaftliches Arbeitsgerät in Form eines Schleuderstreuers oder einer Feldspritze an ein Trägerfahrzeug zu koppeln und zu betreiben, sodass infolge einer Betätigung der Verstelleinrichtung der Tragstruktur eine definierte Lage des Montagerahmens und im Weiteren des daran montierten Arbeitsgeräts eingestellt werden kann. Dies ist beispielsweise vorteilhaft, wenn der Schleuderstreuer oder die Feldspritze mit einer sich ergebenden oder resultierenden Ausbringungsebene für das landwirtschaftliche Gut im Wesentlichen horizontal ausgerichtet sein muss, um ein optimales Streubild oder Spritzbild zu erzielen.

Mit anderen Worten gewährleistet die Tragstruktur gemäß der vorliegenden Erfindung eine Verstellung des Arbeitsgeräts zu dem und/oder an dem Trägerfahrzeug in einem Betriebszustand.

Dadurch kann beispielsweise bei Arbeitsbreiten von bis zu ca. 50 m noch eine im Wesentlichen oder eine hinreichend gleichmäßige Ausbringung des landwirtschaftlichen Guts auf dem Boden realisiert werden.

Gemäß einem weiteren Aspekt der vorliegenden Erfindung kann vorgesehen sein, dass die definierte Lage eine Ausrichtung des Montagerahmens, vorzugsweise des Arbeitsgeräts in einem Montagezustand und/oder ein einem Betriebszustand, zu dem und/oder an dem Kopplungsrahmen und/oder zu dem Boden umfasst, um vorzugsweise eine im Wesentlichen horizontale Ausrichtung einer resultierenden Ausbringungsebene des Guts an dem Arbeitsgerät einzustellen.

Es ist möglich, dass der zumindest eine Parameter ein erfasster, vorzugsweise gemessener, und/oder ein berechneter Parameter ist, vorzugsweise in einem Betriebszustand des Arbeitsgeräts. Der zumindest eine Parameter kann zumindest einen von folgenden umfassen: eine Ist-Lage, vorzugsweise eine Ist-Neigung, des Montagerahmens und/oder des Arbeitsgeräts zu dem und/oder an dem Kopplungsrahmen und/oder zu dem Boden und/oder zu einer Horizontalen; ein Ist-Abstand des Montagerahmens und/oder des Arbeitsgeräts zu dem Boden; eine Beschleunigung zumindest einer Referenzstelle an dem Montagerahmen und/oder an dem Arbeitsgerät; ein Betätigungszustand und/oder eine zeitliche Änderung des Betätigungszustands der Verstelleinrichtung; eine Lage eines resultierenden Schwerpunkts des Arbeitsgeräts, vorzugsweise einer Ballastierung eines Vorratsbehälters des Arbeitsgeräts für das landwirtschaftliche Gut; und/oder einen durch zumindest eine Sensoreinrichtung erfassten und/oder berechneten Parameter der Verstelleinrichtung, vorzugsweise umfassend einen Druck oder eine Druckänderung, eine Kraft oder eine Kraftänderung, und/oder einen Weg oder eine Wegänderung, wobei die zumindest eine Sensoreinrichtung in Wirkverbindung mit der Verstelleinrichtung steht oder mit der Verstelleinrichtung verbunden ist. Die zumindest eine Sensoreinrichtung kann als Drucksensor, als Kraftsensor und/oder als Wegsensor ausgebildet sein oder zumindest einen solchen umfassen. Die Verstelleinrichtung kann im Weiteren demnach beispielsweise mittels Druckventilen gesteuert und/oder geregelt werden, vorzugsweise wenn die Verstelleinrichtung hydraulisch betätigbar konfiguriert ist.

Gemäß einem weiteren Gesichtspunkt der vorliegenden Erfindung kann vorgesehen sein, dass die Tragstruktur zur Erfassung und/oder Berechnung des zumindest einen Parameters zumindest eine von folgenden Sensoreinrichtungen umfasst: einen Beschleunigungssensor; einen Drehratensensor; einen Abstandssensor; einen Gewichtssensor; und/oder einen Lagesensor. Die zumindest eine Sensoreinrichtung kann zur Umwandlung des erfassten und/oder berechneten Parameters in zumindest ein elektrisches Signal konfiguriert sein.

Es ist möglich, dass die Verstelleinrichtung und der Montagerahmen relativ zueinander beweglich gekoppelt, vorzugsweise gelenkig gekoppelt, sind, und/oder dass die Verstelleinrichtung und der Kopplungsrahmen relativ zueinander beweglich gekoppelt, vorzugsweise gelenkig gekoppelt, sind, und/oder dass in einer Untersicht auf die Tragstruktur die Verstelleinrichtung zwischen dem Kopplungsrahmen und dem Montagerahmen angeordnet ist.

Gemäß einem weiteren Aspekt der vorliegenden Erfindung kann vorgesehen sein, dass der Montagerahmen mittels der Lagereinrichtung an dem und/oder zu dem Kopplungsrahmen um eine Schwenkachse schwenkbeweglich gelagert ist, vorzugweise mittels eines Lagerbolzens und/oder in einem definierten Schwenkwinkelbereich; und/oder dass in einer Untersicht auf die Tragstruktur eine Richtung einer Schwenkachse der Lagereinrichtung und eine Betätigungsrichtung der Verstelleinrichtung zueinander im Wesentlichen senkrecht angeordnet sind.

Es ist möglich, dass die Lagereinrichtung an der Tragstruktur zu der Verstelleinrichtung gegenüberliegend und/oder zu der Verstelleinrichtung beabstandet angeordnet ist. Dadurch lässt sich beispielsweise eine effiziente Verstellung des Montagerahmens zu dem Kopplungsrahmen und/oder an dem Kopplungsrahmen realisieren.

Gemäß einem weiteren Gesichtspunkt der vorliegenden Erfindung kann vorgesehen sein, dass der Montagerahmen mittels zumindest einer Rolleinrichtung an dem Kopplungsrahmen abrollbar, vorzugsweise unter Ausbildung eines bogenförmigen Rollbahnabschnitts, gelagert und/oder abgestützt ist. Dadurch wird beispielsweise eine verbesserte Lastverteilung und/oder Lastübertragung gewährleistet.

Es ist möglich, dass der Kopplungsrahmen zur schwenkbaren Lagerung des Montagerahmens innerhalb eines definierten Winkelbereichs zumindest einen ersten Anschlag und zumindest einen zweiten Anschlag ausbildet, vorzugsweise für zumindest eine Rolleinrichtung an dem oder des Montagerahmens.

Gemäß einem weiteren Aspekt der vorliegenden Erfindung kann vorgesehen sein, dass die Verstelleinrichtung in zumindest einer Betätigungsrichtung als formvariabler, vorzugsweise längenveränderlicher, Aktuator ausgebildet ist oder einen formvariablen Aktuator umfasst, und/oder dass die Verstelleinrichtung elektrisch, mechanisch, elektromechanisch, hydraulisch und/oder pneumatisch betätigbar konfiguriert ist, wobei vorzugsweise die Verstelleinrichtung konfiguriert ist, den Montagerahmen mit einer Verstellkraft in zwei zueinander entgegengesetzten Richtungen zu beaufschlagen. Die Verstelleinrichtung kann vorzugsweise als ein doppeltwirkender Zylinder ausgebildet sein oder einen doppeltwirkenden Zylinder umfassen. Der Zylinder kann mit einem Arbeitsmedium, beispielsweise in Form von Hydrauliköl, betätigbar konfiguriert sein. Insbesondere kann der doppeltwirkende Zylinder durch zwei gegensinnig wirkende einfachwirkende Zylinder gebildet sein.

Der zumindest eine Parameter könnte auch durch mit der Verstelleinrichtung in Wirkverbindung stehende Sensoren, Erfassungseinrichtungen oder dergl. erfasst werden. Bspw. Drucksensoren, Kraftsensoren, Wegmesssysteme. Auch eine Ansteuerung der Verstelleinrichtung mittels bspw. Druckregelventilen wäre denkbar.

Gemäß einem weiteren Gesichtspunkt der vorliegenden Erfindung kann vorgesehen sein, dass in einer Frontansicht auf die Tragstruktur der Kopplungsrahmen und der Montagerahmen jeweils durch eine dreieckförmige Außenkontur gekennzeichnet sind und/oder zumindest abschnittsweise zueinander ähnlich ausgebildet sind. Dadurch kann beispielsweise ein kompakter und/oder platzsparender Aufbau der Tragstruktur gewährleistet werden.

Die vorliegende Erfindung betrifft nach einem zweiten allgemeinen Gesichtspunkt ein landwirtschaftliches Arbeitsgerät mit einer Tragstruktur wie hierin offenbart, wobei das Arbeitsgerät zur Ausbringung eines landwirtschaftlichen Guts auf einen Boden konfiguriert ist, wobei vorzugsweise das Arbeitsgerät als Schleuderstreuer mit zumindest einer Schleuderscheibe oder als Feldspritze mit zumindest einer Spritzdüse ausgebildet ist. Das landwirtschaftliche Gut kann ein streubares Gut, beispielsweise körnerförmiges Düngemittel, oder ein spritzbares Gut, beispielsweise flüssiges Pflanzenschutzmittel, sein. Bei der Ausbildung als Schleuderstreuer kann das Arbeitsgerät vorzugsweise zwei nebeneinander angeordnete Schleuderscheiben sowie einen Vorratsbehälter zur Beherbergung des landwirtschaftlichen Guts umfassen.

Die vorliegende Erfindung betrifft nach einem dritten allgemeinen Gesichtspunkt ein Verfahren zum Ausbringen eines landwirtschaftlichen Guts auf einem Boden mittels einem landwirtschaftlichen Arbeitsgerät, wobei das Arbeitsgerät an einen Montagerahmen einer Tragstruktur montiert ist und ein Kopplungsrahmen der Tragstruktur an ein landwirtschaftliches Trägerfahrzeug gekoppelt ist, wobei vorzugsweise die Tragstruktur wie hierin offenbart konfiguriert ist, und/oder wobei das Arbeitsgerät wie hierin offenbart konfiguriert ist; wobei der Kopplungsrahmen und der Montagerahmen mittels einer Lagereinrichtung relativ zueinander beweglich gekoppelt sind, wobei, vorzugsweise mittels zumindest einer Sensoreinrichtung, zumindest ein Parameter erfasst und/oder berechnet wird, und wobei, vorzugsweise mittels einer Automatisierungseinrichtung, in Abhängigkeit des erfassten und/oder berechneten zumindest einen Parameters eine definierte Lage des Montagerahmens zu dem Kopplungsrahmen und/oder zu dem Boden durch Steuern und/oder Regeln einer Verstelleinrichtung der Tragstruktur, welche betätigbar konfiguriert ist, eingestellt wird.

Gemäß einem weiteren Gesichtspunkt der vorliegenden Erfindung kann vorgesehen sein, dass infolge des Steuerns und/oder Regelns der Verstelleinrichtung der Montagerahmen an dem und/oder zu dem Kopplungsrahmen von einer Ist-Lage in die definierte Lage um eine Schwenkachse schwenkt; und/oder dass sich infolge des Betätigens der Verstelleinrichtung durch das Steuern und/oder Regeln eine Lage, vorzugsweise eine Ausrichtung, der Verstelleinrichtung zu dem Kopplungsrahmen und/oder zu dem Montagerahmen ändert. Die Verstelleinrichtung kann direkt oder unmittelbar zwischen dem Kopplungsrahmen und dem Montagerahmen angeordnet sein und infolge einer Betätigung selbst seine Lage ändern.

Es ist möglich, dass das Einstellen der definierten Lage ein Ausrichten des Montagerahmens, vorzugsweise des Arbeitsgeräts, zu dem und/oder an dem Kopplungsrahmen und/oder zu dem Boden umfasst, um vorzugsweise eine horizontale Lage einer sich ergebenden oder resultierenden Ausbringungsebene des Guts an dem Arbeitsgerät einzustellen.

Die Ausbringungsebene kann eine Ebene sein, welche sich örtlich an dem Arbeitsgerät im Zuge des Ausbringens oder Verteilens des Guts G ergibt oder daraus resultiert und eine anfängliche und/oder arbeitsgerätbezogene Lage des auszubringenden Guts beschreibt.

Zur Vermeidung von Wiederholungen sollen rein auf die Vorrichtung der erfindungsgemäßen Tragstruktur und/oder des erfindungsgemäßen landwirtschaftlichen Arbeitsgeräts gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: ein Ausführungsbeispiel der Tragstruktur gemäß der vorliegenden Erfindung in einer ersten perspektivischen Ansicht;
- Fig. 2: die Tragstruktur aus Figur 1 in einer zweiten perspektivischen Ansicht;
- Fig. 3: die Tragstruktur aus Figur 1 in einer Frontansicht (Hauptansicht);
- Fig. 4: die Tragstruktur aus Figur 1 in einer Rückansicht;
- Fig. 5: die Tragstruktur aus Figur 1 in einer Seitenansicht;
- Fig. 6: die Tragstruktur aus Figur 1 in einer Unteransicht;
- Fig. 7: ein Ausführungsbeispiel des landwirtschaftlichen Arbeitsgeräts gemäß der vorliegenden Erfindung in einer ersten perspektivischen Ansicht zusammen mit der Tragstruktur aus den Figuren 1 bis 6;
- Fig. 8: ein Trägerfahrzeug, an welchem das landwirtschaftliche Arbeitsgerät aus Figur 7 mittels der Tragstruktur gekoppelt ist, in einer Seitenansicht in einem Betriebszustand;
- Fig. 9: das Trägerfahrzeug aus Figur 8 mit dem landwirtschaftlichen Arbeitsgerät in einem ersten Betriebszustand;
- Fig. 10: das Trägerfahrzeug aus Figur 8 mit dem landwirtschaftlichen Arbeitsgerät in einem zweiten Betriebszustand.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

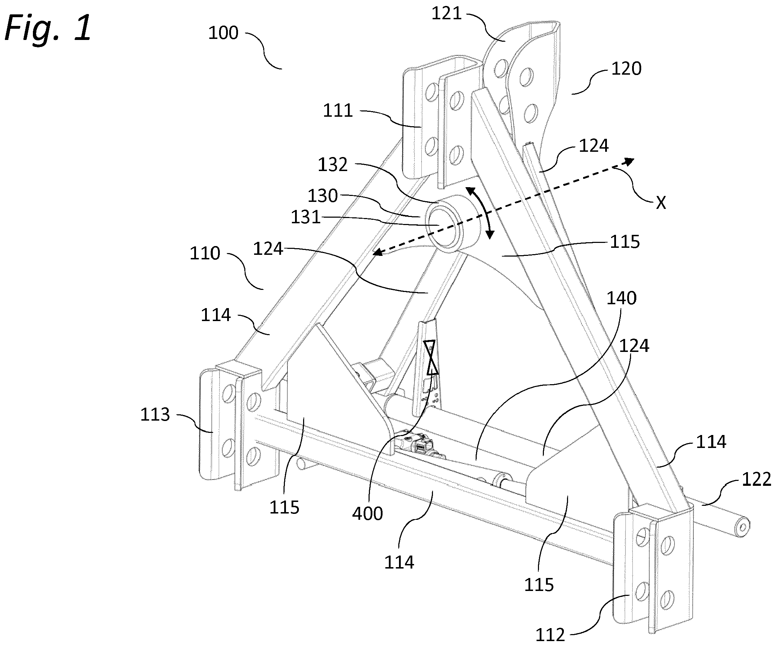

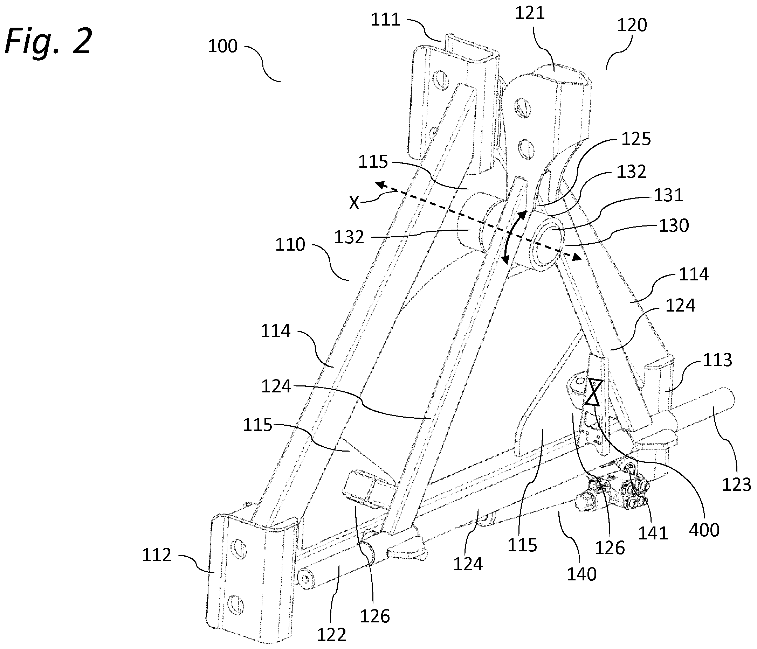

Figur 1 zeigt ein Ausführungsbeispiel der Tragstruktur 100 gemäß der vorliegenden Erfindung in einer ersten perspektivischen Ansicht. Figur 2 zeigt die Tragstruktur 100 aus Figur 1 in einer zweiten perspektivischen Ansicht.

Nachfolgend wird die Tragstruktur 100 zunächst anhand oder unter Bezugnahme der Darstellungen in den Figuren 1 und 2 beschrieben.

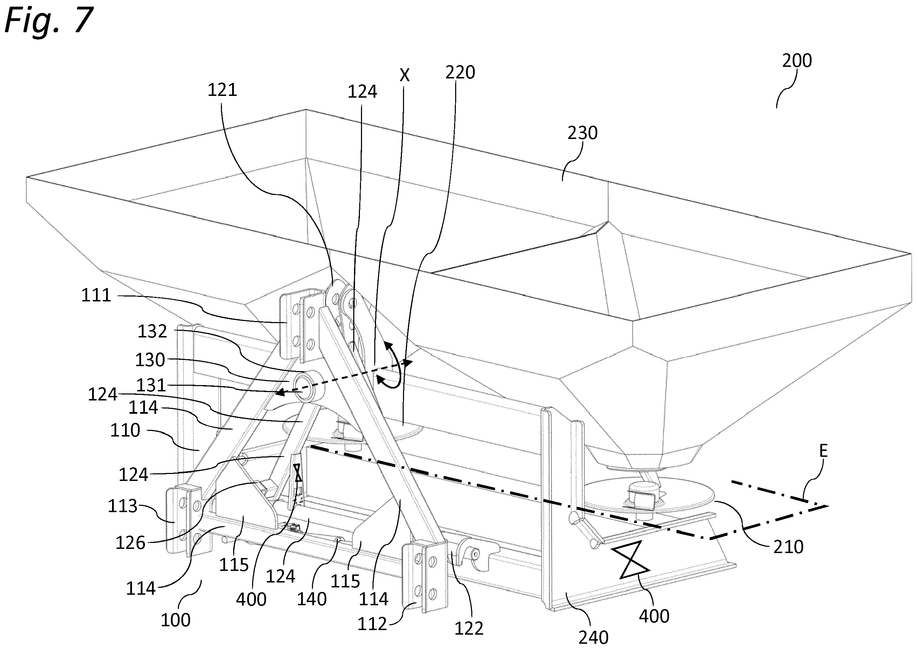

Die Tragstruktur 100 ist für ein landwirtschaftliches Arbeitsgerät 200 zur Ausbringung eines landwirtschaftlichen Guts G auf einem Boden B konfiguriert. Nachfolgend wird das landwirtschaftliche Arbeitsgerät 200 auch abgekürzt als "Arbeitsgerät 200" bezeichnet. Nachfolgend wird das landwirtschaftliche Gut G auch abgekürzt als "Gut G" bezeichnet. Ein Ausführungsbeispiel des Arbeitsgeräts 200 ist beispielsweise in Verbindung mit der Tragstruktur 100 in Figur 7 dargestellt und wird anhand Figur 7 beschrieben.

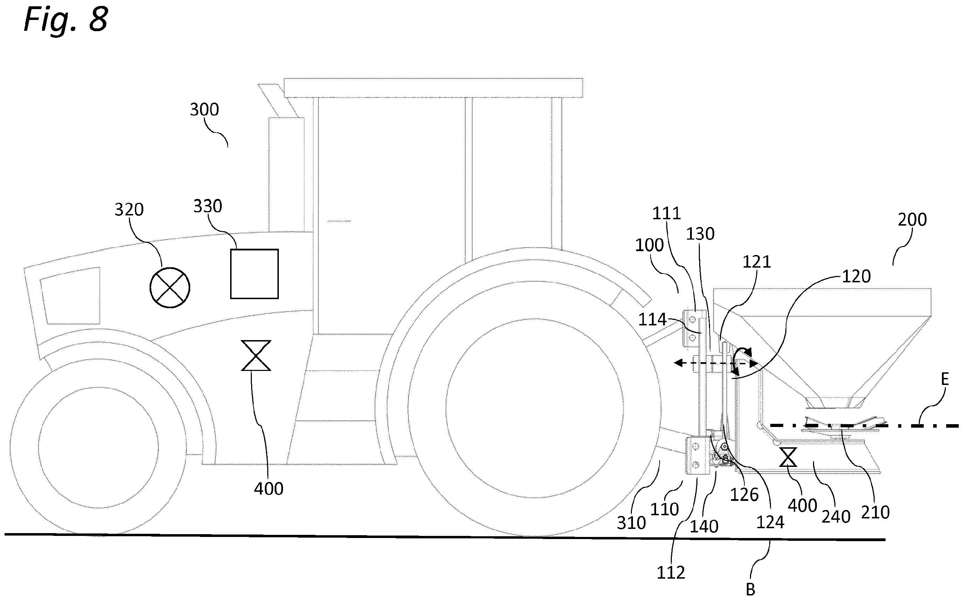

Die Tragstruktur 100 gemäß der vorliegenden Erfindung dient vor allem als verstellbarer tragender Kopplungsmechanismus zwischen dem Arbeitsgerät 200 und einem landwirtschaftlichen Trägerfahrzeug 300, mit welchem das Arbeitsgerät 200 mittels der Tragstruktur 100 gekoppelt werden kann und/oder in einem Betriebszustand an das landwirtschaftliche Trägerfahrzeug 300 gekoppelt ist (siehe hierzu beispielsweise im Weiteren Figur 8). Nachfolgend wird das landwirtschaftliche Trägerfahrzeug 300 auch abgekürzt als "Trägerfahrzeug 300" bezeichnet.

Ein Betriebszustand stellt vorzugsweise und/oder umfasst vorzugsweise einen Zustand der Tragstruktur 100 und/oder des Arbeitsgeräts 200, bei welchem die Tragstruktur 100 und/oder das Arbeitsgerät 200 bestimmungsgemäß und/oder ordnungsgemäß funktioniert und/oder betrieben wird, vorzugsweise mittels des Trägerfahrzeugs 300. Ein Betriebszustand umfasst vorzugsweise einen Zustand, an welcher das Arbeitsgerät 200 mittels der Tragstruktur 100 an das Trägerfahrzeug 300 gekoppelt ist.

Die Tragstruktur 100 umfasst einen Kopplungsrahmen 110. Der Kopplungsrahmen 110 ist zur Koppelung an das Trägerfahrzeug 300 konfiguriert. Das Trägerfahrzeug 300 kann hierzu eine Kopplungsstruktur 310, vorzugsweise in Form eines Dreipunkt-Krafthebers 310, umfassen (siehe auch Figur 8). Wie sich anschaulich aus der Darstellung in Figur 1 ergibt, ist der Kopplungsrahmen 110 zur Koppelung an einen Dreipunkt-Kraftheber 310 des Trägerfahrzeugs 300 konfiguriert und umfasst hierzu den Kopplungsabschnitt 111, den Kopplungsabschnitt 112 und den Kopplungsabschnitt 113. Die drei Kopplungsabschnitte 111, 112 und 113 sind jeweils in Form von Aufnahmeschalen für jeweilige Lenker des Dreipunkt-Krafthebers 310 mittels Bolzen ausgebildet.

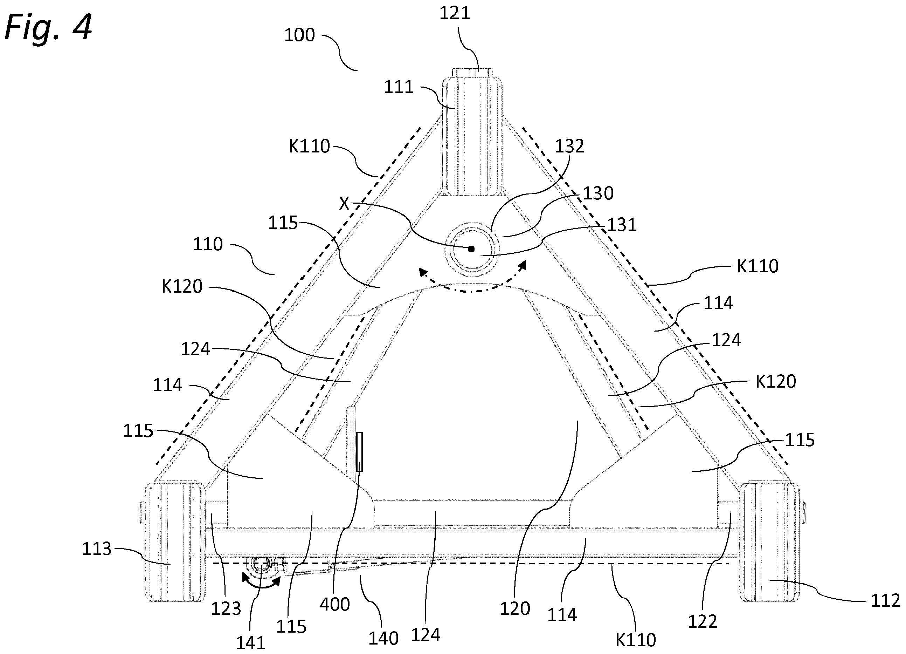

Die Kopplungsabschnitte 111, 112 und 113 sind jeweils mittels eines Tragprofils 114 miteinander verbunden. Das jeweilige Tragprofil 114 kann als ein geschlossenes Profil, beispielsweise als Vierkantrohr mit einem im Wesentlichen rechteckförmigen Querschnitt, oder als halboffenes Profil, beispielsweise in Form einer U-Tragschiene, ausgebildet sein. Die Tragprofile 114 sind bei dem vorliegenden Ausführungsbeispiel der Tragstruktur 100 in einer Ansicht, vorzugsweise in einer Rückansicht auf die Tragstruktur 100, derart zueinander angeordnet und/oder über die Kopplungsabschnitte 111, 112, 113 miteinander verbunden, sodass der Kopplungsrahmen 110 zumindest abschnittsweise durch eine dreieckförmige Außenkontur K110 gekennzeichnet ist. Dies ergibt sich graphisch anschaulich beispielsweise auch aus der Darstellung in Figur 4.

Ferner sind die Tragprofile 114 jeweils mit einer Tragplatte 115 als Verbindungselement und/oder Versteifungselement des Kopplungsrahmens 110 verbunden. Dadurch lässt sich beispielsweise eine erhöhte Stabilität und/oder eine optimierte Lastverteilung realisieren, durch welche die Tragstruktur 100 und vor allem der Kopplungsrahmen 110 gemäß der vorliegenden Erfindung gekennzeichnet ist. Die Verbindung zwischen den Kopplungsabschnitten 111, 112, 113, den Tragprofilen 114 und den Tragplatten 115 kann beispielsweise jeweils als eine stoffschlüssige Verbindung ausgebildet sein oder jeweils eine stoffschlüssige Verbindung umfassen, vorzugsweise in Form einer Schweißverbindung.

Die Tragstruktur 100 umfasst einen Montagerahmen 120. Der Montagerahmen 120 ist zur Montage an das Arbeitsgerät 200, vorzugsweise an einen Geräterahmen 240 des Arbeitsgeräts 200, und/oder zur Montage des Arbeitsgeräts 200, vorzugsweise des Geräterahmens 240 des Arbeitsgeräts 200, an die Tragstruktur 100 konfiguriert. Der Montagerahmen 120 umfasst hierzu den Montageabschnitt 121, den Montageabschnitt 122 und den Montageabschnitt 123. Der Montageabschnitt 123 ist bei der Darstellung in Figur 2 sichtbar. Die drei Montageabschnitte 121, 122 und 123 sind über jeweils ein Tragprofil 124 miteinander verbunden. Das jeweilige Tragprofil 124 kann vorzugsweise als ein geschlossenes Profil, beispielsweise als Vierkantrohr mit einem im Wesentlichen rechteckförmigen Querschnitt, oder als halboffenes Profil, beispielsweise in Form einer U-Tragschiene, ausgebildet sein.

Es ist möglich, dass zumindest eines der Tragprofile 114 und/oder zumindest eines der Tragprofile 124 als massives Tragprofil, beispielsweise in Form einer Stange, ausgebildet ist. Bei dem vorliegenden Ausführungsbeispiel ist das Tragprofil 124, welches in die Montageabschnitte 122 und 123 übergeht und/oder diese umfasst, beispielsweise als massives stangenförmiges oder stabförmiges Tragprofil 124 mit einem im Wesentlichen kreisrunden Querschnitt ausgebildet. Demnach sind die Montageabschnitte 122 und 123 im Wesentlichen zylinderförmig oder bolzenförmig ausgebildet.

Die Tragprofile 124 können beispielsweise mittels einer stoffschlüssigen Verbindung und/oder einer formschlüssigen Verbindung und/oder einer kraftschlüssigen Bindung miteinander verbunden sein. Bei dem vorliegenden Ausführungsbeispiel sind die Tragprofile 124 beispielsweise mittels einer Schweißverbindung und/oder mittels Muffen miteinander verbunden.

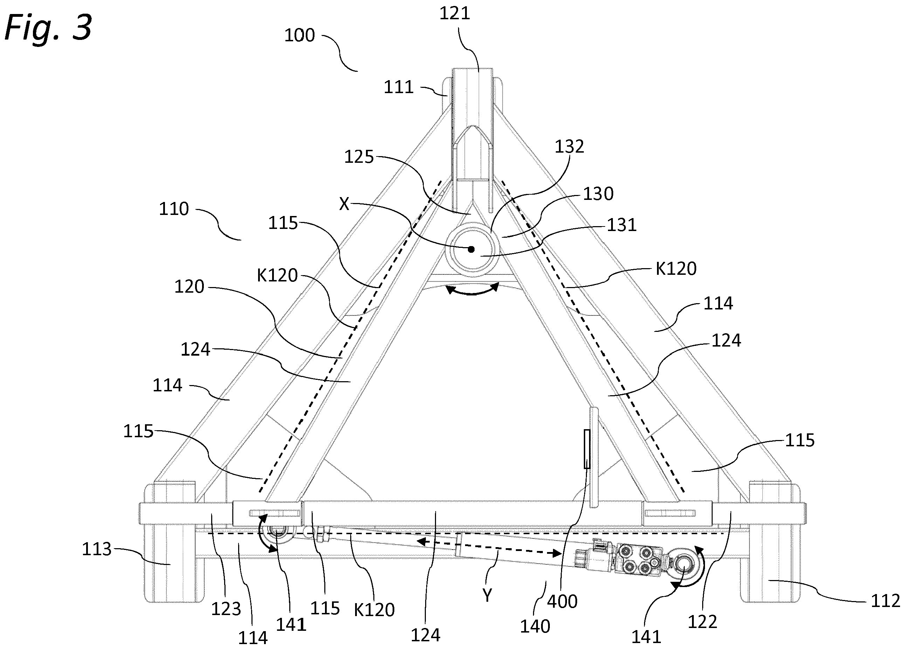

Die Tragprofile 124 sind in einer Ansicht, vorzugsweise in einer Frontansicht (Hauptansicht) auf die Tragstruktur 100, derart zueinander angeordnet und/oder über die drei Montageabschnitte 121, 122, 123 miteinander verbunden, sodass der Montagerahmen 110 zumindest abschnittsweise durch eine dreieckförmige Außenkontur K120 gekennzeichnet ist. Dies ergibt sich graphisch anschaulich beispielsweise auch aus der Darstellung in Figur 3. Die Frontansicht stellt als Hauptansicht vorzugsweise die aussagefähigste Ansicht dar.

Der Kopplungsrahmen 110 und der Montagerahmen 120 sind mittels einer Lagereinrichtung 130 relativ zueinander beweglich gekoppelt. Vorzugsweise ist der Montagerahmen 120 mittels der Lagereinrichtung 130 an dem und/oder zu dem Kopplungsrahmen 110 um eine Schwenkachse X schwenkbeweglich gelagert. Bei dem dargestellten Ausführungsbeispiel wird die schwenkbewegliche Lagerung mittels der Lagereinrichtung 130 durch einen Lagerbolzen 131 und durch zwei Lagerhülsen 132 realisiert. Eine (erste) Lagerhülse 132, welche dem Kopplungsrahmen 110 zugeordnet ist, ist in und/oder an einer der Tragplatten 115 des Montagerahmens 110 befestigt. Eine weitere (zweite) Lagerhülse 132, welche dem Montagerahmen 120 zugeordnet ist, ist in und/oder an einer Tragplatte 125 zwischen zwei Tragprofilen 124 des Montagerahmens 120 befestigt (siehe hierzu die Figuren 2 und 3).

Zur Abstützung und/oder Übertragung entsprechender Lasten umfasst der Montagerahmen 120 zwei Rolleinrichtungen 126, welche sich jeweils an der jeweiligen Tragplatte 115 des Kopplungsrahmens 110 abstützen und/oder auf dieser abrollen. Mit anderen Worten ist der Montagerahmen 120 mittels zweier Rolleinrichtungen 126 an dem Kopplungsrahmen 110 abrollbar, vorzugsweise unter Ausbildung eines bogenförmigen Rollbahnabschnitts, gelagert und/oder abgestützt.

Zur schwenkbaren Lagerung des Montagerahmens 120 innerhalb eines definierten Winkelbereichs können der Kopplungsrahmen 110 und hierbei die mit dem Kopplungsabschnitt 111 verbundenen Tragprofile 114 jeweils einen Anschlag für die jeweilige Rolleinrichtung 126 bilden. Mit anderen Worten können zueinander gegenüberliegend angeordnete Flächen der Tragprofile 114 des Kopplungsrahmens 110 Anschläge für die Rolleinrichtungen 126 des Montagerahmens 120 bilden.

Zur graphischen Veranschaulichung der Schwenkbewegung des Montagerahmens 120 an dem und/oder zu dem Kopplungsrahmen 110 mittels der Lagereinrichtung 130 ist in den Figuren im Bereich der Lagereinrichtung 130 ein gekrümmter Doppelpfeil dargestellt.

Die Tragstruktur 100 umfasst eine Verstelleinrichtung 140. Die Verstelleinrichtung 140 ist zur Einstellung einer definierten Lage des Montagerahmens 120 zu dem und/oder an dem Kopplungsrahmen 110 und/oder zu dem Boden B, vorzugsweise in einem mit einem Arbeitsgerät 200 montierten Zustand (Montagezustand) und besonders bevorzugt in einem Betriebszustand des Arbeitsgeräts 200, in Abhängigkeit und/oder anhand von zumindest einem Parameter betätigbar konfiguriert.

Die definierte Lage umfasst eine definierte Position und/oder vor allem eine definierte Ausrichtung und somit Orientierung des Montagerahmens 120 und im Weiteren des Arbeitsgeräts 200 zu dem und/oder an dem Kopplungsrahmen 110 und/oder zu dem Boden B und/oder zu dem Trägerfahrzeug 300, um vorzugsweise eine im Wesentlichen horizontale Lage, das heißt Ausrichtung einer sich ergebenden oder resultierenden Ausbringungsebene E des Guts G an dem Arbeitsgerät 200 einzustellen und/oder zu erhalten.

Das Einstellen und/oder Erhalten einer im Wesentlichen horizontalen Lage, das heißt Ausrichtung einer sich ergebenden oder resultierenden Ausbringungsebene E kann vorzugsweise mit dem Verfahren gemäß der vorliegenden Erfindung realisiert werden.

Der zumindest eine Parameter kann ein erfasster, vorzugsweise gemessener, und/oder ein berechneter Parameter sein, vorzugsweise in einem Betriebszustand des Arbeitsgeräts 200. Der zumindest eine Parameter kann zumindest einen von folgenden umfassen: eine Ist-Lage, vorzugsweise eine Ist-Neigung (Ausrichtung), des Montagerahmens 120 und/oder des Arbeitsgeräts 200 zu dem und/oder an dem Kopplungsrahmen 110 und/oder zu dem Boden B und/oder zu dem Trägerfahrzeug 300; ein Ist-Abstand des Montagerahmens 120 und/oder des Arbeitsgeräts 200 zu dem Boden B; eine Beschleunigung zumindest einer Referenzstelle an dem Montagerahmen 120 und/oder an dem Arbeitsgerät 200; und/oder ein Betätigungszustand und/oder eine zeitliche Änderung des Betätigungszustands der Verstelleinrichtung 140; eine Lage eines resultierenden Schwerpunkts des Arbeitsgeräts 200, vorzugsweise eine Ballastierung eines Vorratsbehälters 230 des Arbeitsgeräts 200 für das landwirtschaftliche Gut G.

Zur Erfassung und/oder Berechnung des zumindest einen Parameters kann die Tragstruktur 100 zumindest eine von folgenden Sensoreinrichtungen 400 umfassen: einen Beschleunigungssensor; einen Drehratensensor; einen Abstandssensor; einen Gewichtssensor und/oder einen Lagesensor. Bei dem in den Figuren dargestellten Ausführungsbeispiel umfasst der Montagerahmen 120 an einem Montageprofil 124 zumindest eine Sensoreinrichtung 400 zur Erfassung und/oder Berechnung zumindest eines Parameters. Es ist möglich, dass das Arbeitsgerät 200 und/oder das Trägerfahrzeug 300 zumindest eine weitere Sensoreinrichtung 400 zur Erfassung und/oder Berechnung zumindest eines Parameters umfasst.

Eine Sensoreinrichtung 400 kann beispielsweise auch als optischer Sensor oder als Radarsensor ausgebildet sein oder einen solchen umfassen.

Mittels der zumindest einen Sensoreinrichtung 400 und/oder von der zumindest einen Sensoreinrichtung 400 kann der erfasste und/oder berechnete zumindest eine Parameter, vorzugsweise in Form zumindest eines elektrischen Signals, an weitere Komponenten und/oder Einrichtungen des Arbeitsgeräts 200 und/oder des Trägerfahrzeugs 300 übertragen werden, vorzugsweise mittels eines Signalkommunikationsnetzwerks (Bussystems), um die Verstelleinrichtung 140 in Abhängigkeit davon zu betätigen, was nachfolgend noch näher erläutert wird.

Figur 3 zeigt die Tragstruktur 100 aus Figur 1 in einer Frontansicht (Hauptansicht).

Die Verstelleinrichtung 140 und der Montagerahmen 120 sind relativ zueinander beweglich gekoppelt, vorzugsweise gelenkig gekoppelt. Ferner sind die Verstelleinrichtung 140 und der Kopplungsrahmen 110 relativ zueinander beweglich gekoppelt, vorzugsweise gelenkig gekoppelt. Dies ist in Figur 3 mittels zweier gekrümmter Doppelpfeile an den entsprechenden Koppelstellen 141 in Form von Drehgelenken der Verstelleinrichtung 140 graphisch dargestellt.

Die Verstelleinrichtung 140 ist in einer Betätigungsrichtung Y als formvariabler Aktuator ausgebildet oder umfasst einen formvariablen Aktuator. Die Verstelleinrichtung 140 kann elektrisch, mechanisch, elektromechanisch, hydraulisch und/oder pneumatisch betätigbar konfiguriert sein. Vorzugsweise ist die Verstelleinrichtung 140 als zumindest ein Zylinder, besonders bevorzugt als doppeltwirkender Zylinder, betätigbar konfiguriert und/oder umfasst zumindest einen solchen. Mit anderen Worten ist die Verstelleinrichtung 140 mit einem Arbeitsmedium in Form von Hydrauliköl beaufschlagbar und/oder betätigbar, um die Verstelleinrichtung 140 mittels des Arbeitsmediums zu betätigen und somit eine Lage des Montagerahmens 120 und/oder des Arbeitsgeräts 200 zu dem und/oder an dem Kopplungsrahmen 110 und im Weiteren zu dem Boden B und/oder zu dem Trägerfahrzeug 300 einzustellen. Die Verstelleinrichtung 140 ist somit vorzugsweise konfiguriert, den Montagerahmen 120 mit einer Verstellkraft in zwei zueinander entgegengesetzten Richtungen zu beaufschlagen, um somit eine Änderung der Lage, vorzugsweise der Ausrichtung des Montagerahmens 120, zu dem und/oder an dem Kopplungsrahmen 110 infolge Betätigung herbeizuführen. Eine derartige Verstellung lässt sich vor allem mit einer Verstelleinrichtung 140 in Form eines doppeltwirkenden Zylinders hinreichend und/oder ausreichend präzise realisieren. Darüber hinaus kann mittels eines doppeltwirkenden Zylinders als Verstelleinrichtung 140 eine vergleichsweise relativ schnelle Betätigungsgeschwindigkeit der Verstelleinrichtung 140 gewährleistet werden, wobei sich ein Hubweg entsprechend vergrößert oder verkleinert. Bei den Darstellungen in den Figuren sind der Einfachheit halber beispielsweise Anschlusselemente und/oder Ventile der Verstelleinrichtung 140 für ein Arbeitsmedium teilweise ausgeblendet und/oder nicht näher gekennzeichnet.

Es ist alternativ möglich, dass die Verstelleinrichtung 140 anstelle eines doppeltwirkenden Zylinders beispielsweise zwei gegensinnig arbeitende einfachwirkende Zylinder umfasst.

Figur 4 zeigt die Tragstruktur 100 aus Figur 1 in einer Rückansicht. Hieraus ergibt sich beispielsweise, dass die Lagereinrichtung 130 an der Tragstruktur 100 zu der Verstelleinrichtung 140 gegenüberliegend und/oder zu der Verstelleinrichtung 140 beabstandet angeordnet ist. Dadurch lässt sich auf einfache, jedoch effiziente Weise eine definierte Schwenkbewegung des Montagerahmens 120 zu dem und/oder an dem Kopplungsrahmen 110 mittels der Verstelleinrichtung 140 realisieren.

Ferner ergibt sich in der Frontansicht in Figur 3 auf die Tragstruktur 100 und/oder in der Rückansicht in Figur 4 auf die Tragstruktur 100, dass der Kopplungsrahmen 110 und der Montagerahmen 120 jeweils zumindest abschnittsweise durch eine im Wesentlichen dreieckförmige Außenkontur K110 und K120 und/oder jeweils zumindest abschnittsweise durch eine dreieckförmige Konfiguration gekennzeichnet sind, und/oder zumindest abschnittsweise zueinander ähnlich ausgebildet sind.

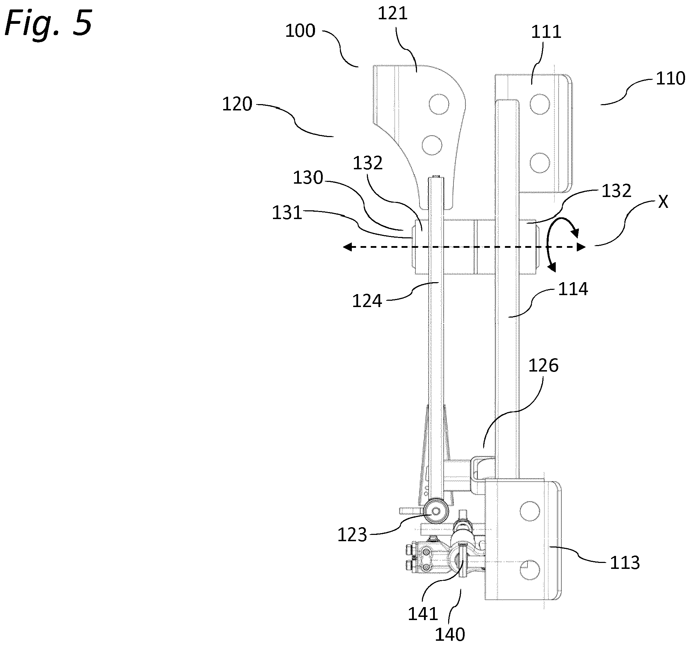

Figur 5 zeigt die Tragstruktur 100 aus Figur 1 in einer Seitenansicht. Der Montagerahmen 120 ist mittels der Ladeeinrichtung 130 um die Schwenkachse X schwenkbeweglich an dem und/oder zu dem Koppelrahmen 110 gelagert. Zur Unterstützung des Schwenkvorgangs ist der Montagerahmen 120 über die beiden Rolleinrichtungen 126 an den entsprechenden Tragplatten 115 und somit an dem Koppelrahmen 110 abrollbar gelagert und/oder abgestützt. Dadurch wird beispielsweise in einem Betriebszustand, das heißt bei einem montierten Arbeitsgerät 200 eine optimale Lastverteilung und/oder Lastübertragung an der Tragstruktur 100 realisiert. Ferner ist dadurch eine verbesserte Beweglichkeit des Montagerahmens 120 gewährleistet, um mittels der Verstelleinrichtung 140 infolge Betätigung eine definierte Lage des Montagerahmens 120 einstellen zu können.

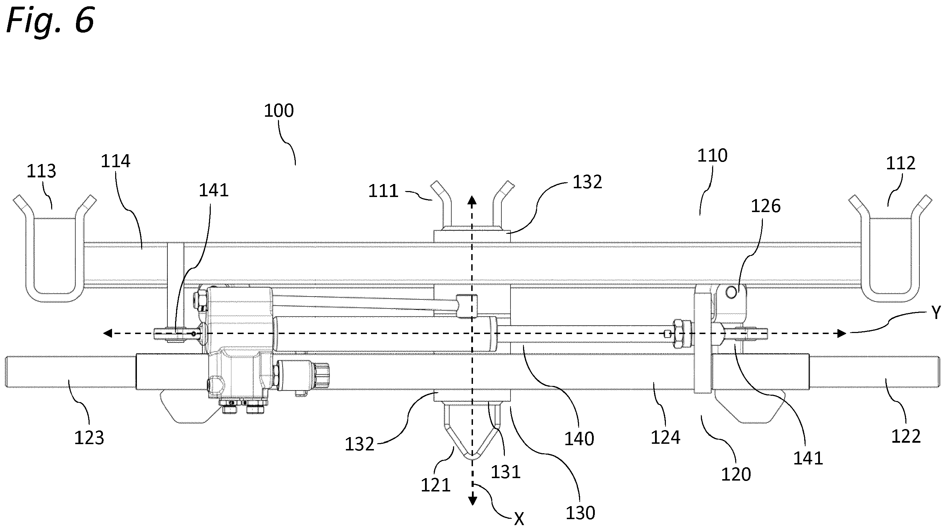

Figur 6 zeigt die Tragstruktur 100 aus Figur 1 in einer Unteransicht. In der Untersicht auf die Tragstruktur 100 ist die Verstelleinrichtung 140 im Wesentlichen zwischen dem Kopplungsrahmen 110 und dem Montagerahmen 120 angeordnet. Dadurch wird beispielsweise gewährleistet, dass die Verstelleinrichtung 140 in einem mehr oder weniger geschützten Bereich der Tragstruktur 100 angeordnet ist, sodass vor allem die Gefahr von Beschädigungen der Verstelleinrichtung 140 vermieden oder zumindest reduziert werden kann.

Ferner ergibt sich aus der oder in der Untersicht auf die Tragstruktur 100, dass die Richtung der Schwenkachse X der Lagereinrichtung 130 im Wesentlichen senkrecht zu der Betätigungsrichtung Y der Verstelleinrichtung 140 angeordnet ist.

Figur 7 zeigt ein Ausführungsbeispiel des landwirtschaftlichen Arbeitsgeräts 200 gemäß der vorliegenden Erfindung in einer ersten perspektivischen Ansicht zusammen mit der Tragstruktur 100 aus den Figuren 1 bis 6.

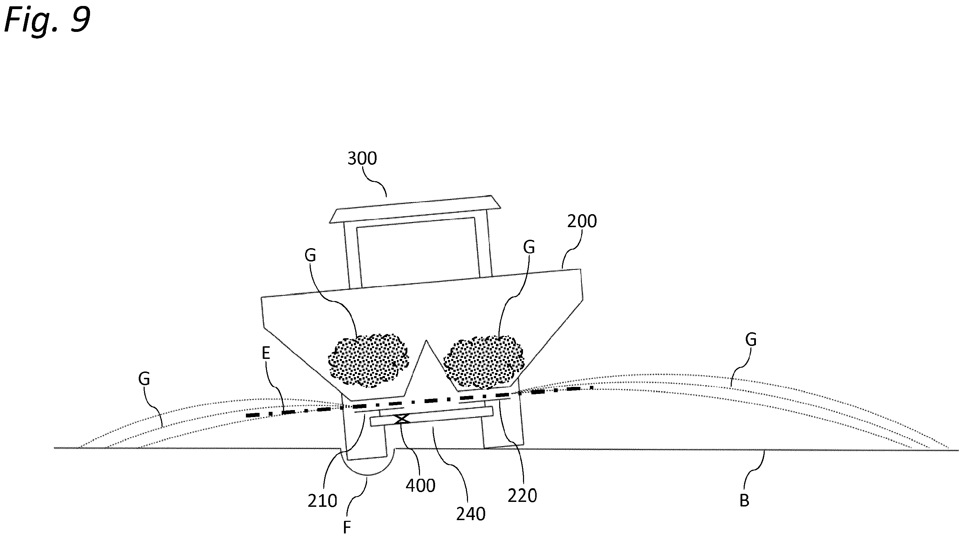

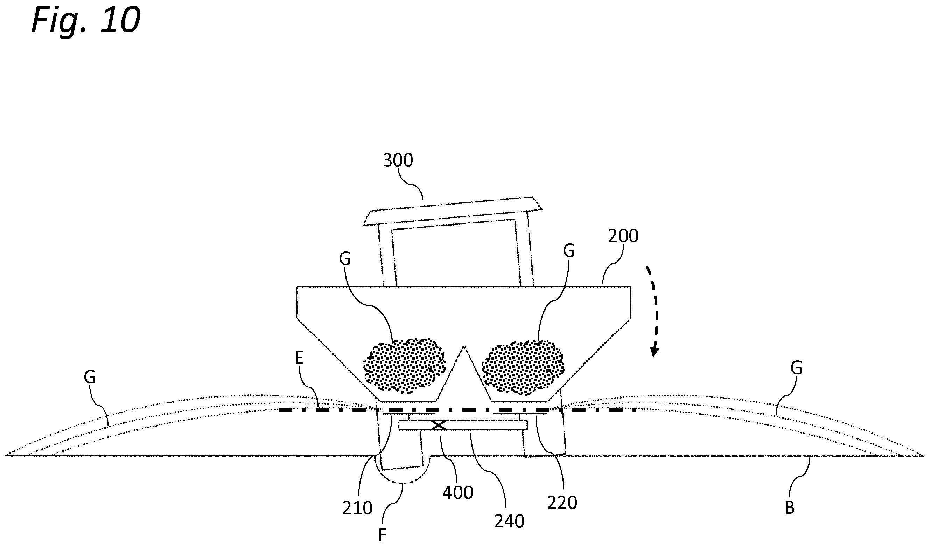

Das Arbeitsgerät 200 kann als Schleuderstreuer in Form eines Scheibenstreuers mit zwei Schleuderscheiben 210, 220 und einem Vorratsbehälter 230 ausgebildet sein. Das Arbeitsgerät 200 dient zur Ausbringung eines landwirtschaftlichen Guts G (siehe hierzu vor allem die Figuren 9 und 10) auf einem Boden B einer landwirtschaftlichen Nutzfläche. Das Gut G ist vorzugsweise ein streubares und/oder schleuderbares Gut G. Das Gut G kann ein Düngemittel (Mineraldünger) in Form von Körnern oder in Granulatform sein.

Der Vorratsbehälter 230 ist zusammen mit der ersten Schleuderscheibe 210 und der zweiten Schleuderscheibe 220 an einem Geräterahmen 240 des Arbeitsgeräts 200 montiert. Die erste Schleuderscheibe 210 und die zweite Schleuderscheibe 220 sind zur Verteilung des Guts G über eine einstellbare Arbeitsbreite entsprechend konfiguriert. Die erste Schleuderscheibe 210 und die zweite Schleuderscheibe 220 können beispielsweise mittels eines Nebenabtriebs des Trägerfahrzeugs 300 in Form einer Zapfwelle antreibbar konfiguriert sein.

In Bezug auf das zu verteilende Gut G ergibt sich oder resultiert an dem Arbeitsgerät 200 und/oder in unmittelbarer Nähe des Arbeitsgeräts 200 eine Ausbringungsebene E, in welcher das Gut G die Schleuderscheiben 210 und 220 verlässt, um sodann infolge des Einflusses der Schwerkraft auf dem und/oder über dem Boden B verteilt zu werden.

Für eine optimale Verteilung, vorzugsweise eine im Wesentlichen gleichmäßige Verteilung, des Guts G ist es wichtig, dass zumindest die sich ergebender oder resultierende Ausbringungsebene E im Wesentlichen horizontal ausgerichtet ist, was wiederum durch die Lage der Schleuderscheiben 210, 220 und/oder des Arbeitsgeräts 200 insgesamt definiert wird.

Die Ausbringungsebene E, das heißt ihre Lage, vor allem ihre Ausrichtung, ist allerdings aufgrund der Koppelung des Arbeitsgeräts 200 an das Trägerfahrzeug 300 in einem Betriebszustand des Arbeitsgeräts 200 mitunter zunächst von den Bewegungen des Trägerfahrzeugs 300 abhängig oder zumindest teilweise durch das Trägerfahrzeug 300 bedingt.

Mittels der Tragstruktur 100 als Koppelmechanismus zwischen dem Trägerfahrzeug 300 und dem Arbeitsgerät 200 ist es möglich, mittels der Verstelleinrichtung 140 eine definierte Lage des Arbeitsgeräts 200 und somit oder vor allem der Ausbringungsebene E, vorzugsweise gegenüber dem Kopplungsrahmen 110 und im Weiteren gegenüber dem Trägerfahrzeug 300, einzustellen.

Mit anderen Worten kann die Verstelleinrichtung 140 durch entsprechende Steuerung und/oder Regelung der Betätigung gewährleisten, dass das Arbeitsgerät 200 in eine definierte Lage eingestellt wird und/oder in einer definierten Lage erhalten bleibt. Zur Steuerung und/oder Regelung der Betätigung der Einstelleinrichtung 140 und somit ihrer Betätigung dienen weitere Komponenten und Einrichtungen, welche nachfolgend noch näher erläutert werden.

Bei einem alternativen Ausführungsbeispiel kann das landwirtschaftliche Arbeitsgerät 200 auch als Feldspritze ausgebildet sein. Das landwirtschaftliche Gut G ist bei dieser Ausgestaltung vorzugsweise ein spritzbares Gut G, beispielsweise in Form eines Pflanzenschutzmittels. Das Arbeitsgerät 200 kann zur Festlegung einer Arbeitsbreite ein Spritzgestänge mit Spritzdüsen umfassen, welches ebenfalls durch eine sich ergebende oder resultierende Ausbringungsebene E, vor allem in einem Betriebszustand, gekennzeichnet ist.

Auch bei einer solchen Ausbildung des Arbeitsgerät 200 kann die Tragstruktur 100 gemäß der vorliegenden Erfindung gewährleisten, dass eine sich ergebende oder resultierende Ausbringungsebene E des Guts G im Wesentlichen in eine/r horizontale Lage, das heißt Ausrichtung eingestellt und/oder erhalten wird, vorzugsweise in einem Betriebszustand des Arbeitsgeräts 200.

Beispielsweise kann eine sich ergebende Neigung des Trägerfahrzeugs 300 während einer Betriebsfahrt, beispielsweise in einer Fahrgasse, mittels der Tragstruktur 100 kompensiert und/oder ausgeglichen werden, und zwar in Bezug auf die Lage, das heißt Ausrichtung des Arbeitsgeräts 200 und der sich ergebenden oder resultierenden Ausbringungsebene E.

An dem Arbeitsgerät 200, das heißt an dem Geräterahmen 240 kann ebenfalls zumindest eine Sensoreinrichtung 400 wie hierin offenbart angeordnet sein, um zumindest einen Parameter zu erfassen und/oder zu berechnen. Beispielsweise kann an dem Geräterahmen 240 eine Sensoreinrichtung 400 in Form eines Lagesensors angeordnet sein, um eine Lage des Arbeitsgeräts 200, beispielsweise eine Neigung gegenüber der Horizontalen zu erfassen.

Figur 8 zeigt in einer Seitenansicht in einem Betriebszustand ein Trägerfahrzeug 300, an welchem das Arbeitsgerät 200, das heißt der Schleuderstreuer in Form eines Scheibenstreuers aus Figur 7 mittels der Tragstruktur 100 gekoppelt ist. Das Trägerfahrzeug 300 ist vorzugsweise als ein Zugfahrzeug, das heißt als ein Ackerschlepper, beispielsweise in Form eines Radtraktors oder eines Raupentraktors, ausgebildet und umfasst neben der Kopplungsstruktur 310, vorzugsweise in Form eines Dreipunkt-Krafthebers 310, eine Ölpumpe 320 sowie eine Automatisierungseinrichtung 330 zur Steuerung und/oder Regelung der Verstelleinrichtung 140 und/oder der Ölpumpe 320 und/oder Kopplungsstruktur 310. Darüber hinaus kann das Trägerfahrzeug 300 zumindest eine Sensoreinrichtung 400 wie hierin offenbart umfassen.

Im Falle der Ausbildung der Verstelleinrichtung 140 als doppeltwirkender Zylinder ist Hydrauliköl als Arbeitsmedium ist in einem Betriebszustand vorzugsweise druckbeaufschlagt, beispielsweise mittels der Ölpumpe 320. Die Ölpumpe 320 kann alternativ auch Bestandteil des Arbeitsgeräts 200 anstelle des Trägerfahrzeugs 300 sein. Bei dem vorliegenden Ausführungsbeispiel umfasst das Trägerfahrzeug 300 die Ölpumpe 320. Die Ölpumpe 320 wird wiederum von der Automatisierungseinrichtung 330 des Trägerfahrzeugs 300 gesteuert und/oder geregelt. Mit anderen Worten sorgt die Automatisierungseinrichtung 330 für eine entsprechende oder jeweilige Verstellung eines Volumenstroms an Arbeitsmedium, das heißt einem Förderstrom an Hydrauliköl an der Ölpumpe 320. Die Ölpumpe 320 kann von einem Antriebsaggregat des Trägerfahrzeugs 300 angetrieben sein. Somit lässt sich eine definierte Ausrichtung des Montagerahmens 120 und im Weiteren des Arbeitsgeräts 200 zu dem und/oder an dem Kopplungsrahmen 110 und/oder zu dem Boden B und/oder zu dem Trägerfahrzeug 300 einstellen.

Eine Betätigung der Verstelleinrichtung 140 bewirkt demnach eine Einstellung der Lage, das heißt der Ausrichtung des Montagerahmens 120 hin zu einer definierten Lage, sodass vorzugsweise die sich ergebende oder resultierende Ausbildungsebene E für das zu verteilende Gut G an dem Arbeitsgerät 200 eine im Wesentlichen horizontale Ausrichtung einnimmt.

Figur 9 zeigt das Trägerfahrzeug 300 aus Figur 8 mit dem Arbeitsgerät 200 in einem ersten Betriebszustand. Das Trägerfahrzeug 300 befindet sich im Rahmen einer Betriebsfahrt auf einer Seite innerhalb einer Furche F des Bodens B, was zu einer Neigung des Trägerfahrzeugs 300 und im Weiteren zunächst auch zu einer Neigung der Tragstruktur 100 und somit des Arbeitsgerät 200 gegenüber der Horizontalen führt. Die sich ergebende oder resultierende Ausbringungsebene E des Arbeitsgeräts 200 ist ebenfalls geneigt. Mit anderen Worten ist die Ausbringungsebene E durch eine schräge Ausrichtung gegenüber der Horizontalen gekennzeichnet. Im Falle der Ausbildung des Arbeitsgeräts 200 als Schleuderstreuer wirkt sich die hier dargestellte Neigung des Arbeitsgeräts 200 negativ auf eine Verteilung des Guts G mittels der beiden Schleuderscheiben 210 und 220 aus. Es kommt, wie in Figur 9 dargestellt, zu einer ungünstigen Verteilung des Guts G über die Arbeitsbreite. Dies resultiert unter anderem dadurch, dass es zu einer Änderung des jeweiligen Auftreffpunkts des Guts G auf die jeweilige Schleuderscheibe 210, 220 kommt, und zwar nach dem Verlassen von Dosiereinrichtungen des Arbeitsgeräts 200. Mit anderen Worten erzeugen die beiden Schleuderscheiben 210 und 220 ein negatives Streubild.

Gemäß dem erfindungsgemäßen Verfahren kann nun beispielsweise die Sensoreinrichtung 400 an dem Geräterahmen 240, welche in Form eines Lagesensors ausgebildet ist oder einen Lagesensor umfasst, eine Ist-Lage des Arbeitsgeräts 200 gegenüber der Horizontalen erfassen. Die erfasste Ist-Lage kann in umgewandelter Form von beispielsweise zumindest einem elektrischen Signal an die Automatisierungseinrichtung 330 des Trägerfahrzeugs 300 übertragen werden, vorzugsweise durch Abfragen der Sensoreinrichtung 400 durch die Automatisierungseinrichtung 330.

Mittels der Automatisierungseinrichtung 330 kann in Abhängigkeit der erfassten Ist-Lage die Verstelleinrichtung 140 entsprechend geregelt und/oder gesteuert werden, sodass eine jeweilige Betätigung der Verstelleinrichtung 140 in Abhängigkeit von der erfassten Ist-Lage erfolgt. Die Betätigung der Verstelleinrichtung 140 führt wiederum zu einer Einstellung in Form einer Schwenkbewegung des Montagerahmens 120 und damit zu einer Verstellung des Arbeitsgeräts 200 mit der sich ergebenden oder resultierenden Ausbringungsebene E.

Die Schwenkachse X zur Realisierung der Schwenkbewegung des Montagerahmens 120 und im Weiteren des Arbeitsgeräts 200 infolge Betätigung der Verstelleinrichtung 140 durch eine jeweilige Steuerung und/oder Regelung erstreckt sich oder orientiert sich im Wesentlichen in der Fahrtrichtung des Trägerfahrzeugs 300. Dies geht vor allem aus der Darstellung in Figur 8 hervor.

Figur 10 zeigt das Trägerfahrzeug 300 aus Figur 9 mit dem Arbeitsgerät 200 in einem zweiten Betriebszustand, wobei das Arbeitsgerät 200 und die Ausbringungsebene E mittels des Verfahrens gemäß der vorliegenden Erfindung in eine definierte Lage eingestellt ist, sodass die sich ergebende oder resultierende Ausbringungsebene W im Wesentlichen horizontal ausgerichtet ist. Dadurch kann beispielsweise eine im Wesentlichen gleichmäßige Verteilung des Guts G durch die beiden Schleuderscheiben 210 und 220 infolge entsprechender Ausrichtung realisiert werden. Eine individuelle, aufwendige Dosierung und/oder Änderung des Auftreffpunkts des Guts G auf die erste Schleuderscheibe 210 und/oder auf die zweite Schleuderscheibe 220 mittels entsprechender Komponenten und Einrichtungen ist daher nicht mehr notwendig.

Das Arbeitsgerät 200 kann mit dem vorliegenden Verfahren und der erfindungsgemäßen Tragstruktur 100 hinsichtlich seiner Lage, vor allem hinsichtlich seiner Ausrichtung zur Verteilung des Guts G optimal eingestellt werden.

Es versteht sich, dass das Trägerfahrzeug 300 und/oder das Arbeitsgerät 200 jeweils weitere Komponenten und Einrichtungen zur Realisierung und/oder Erhaltung des Betriebszustands des Arbeitsgeräts 200 je nach Ausbildung umfasst oder umfassen kann, beispielsweise Hydraulikleitungen, Bedieneinrichtungen, Sicherungseinrichtungen, elektrische/elektronische Recheneinrichtungen, Signalkommunikationsnetzwerk, Dosiereinrichtungen, etc.

Mit dem Trägerfahrzeug 300, der Tragstruktur 100 und dem Arbeitsgerät 200 ist somit ein System bereitgestellt, welches einen optimierten Betriebszustand des Arbeitsgeräts 200 gewährleistet. Das System ist vor allem durch eine Neigungssteuerung und/oder Neigungssteuerung des Arbeitsgeräts 200 gekennzeichnet.

Es ist zusätzlich oder alternativ möglich, in Abhängigkeit von zumindest einem erfassten und/oder berechneten Parameter beispielsweise eine Betätigung der Kopplungsstruktur 310, vorzugsweise in Form eines Dreipunkt-Krafthebers, zu steuern und/oder zu regeln. Dadurch lässt sich beispielsweise eine Lage der Tragstruktur 100 und im Weiteren des Arbeitsgeräts 200 zur Fahrtrichtung und/oder in Fahrtrichtung des Trägerfahrzeugs 300 einstellen.

Mit der vorliegenden Erfindung kann vor allem ein Arbeitsgerät 200, vorzugsweise in Form eines Scheibenstreuers, im Wesentlichen unabhängig von Neigungseinflüssen betrieben werden.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 100: Tragstruktur
- 110: Kopplungsrahmen
- 111: Kopplungsabschnitt
- 112: Kopplungsabschnitt
- 113: Kopplungsabschnitt
- 114: Tragprofil
- 115: Tragplatte
- 120: Montagerahmen
- 121: Montageabschnitt
- 122: Montageabschnitt
- 123: Montageabschnitt
- 124: Tragprofil
- 125: Tragplatte
- 126: Rolleinrichtung
- 130: Lagereinrichtung
- 131: Lagerbolzen
- 132: Lagerhülse
- 140: Verstelleinrichtung
- 141: Koppelstelle
- 200: Arbeitsgerät
- 210: Schleuderscheibe
- 220: Schleuderscheibe
- 230: Behälter
- 240: Geräterahmen
- 300: Trägerfahrzeug
- 310: Kopplungsstruktur
- 320: Ölpumpe
- 330: Automatisierungseinrichtung
- 400: Sensoreinrichtung

- B: Boden
- E: Ausbringungsebene
- F: Furche
- G: Gut
- K110: Außenkontur
- K120: Außenkontur
- X: Schwenkachse
- Y: Betätigungsrichtung

## Patentansprüche

1. Tragstruktur (100) für ein landwirtschaftliches Arbeitsgerät (200) zur Ausbringung eines landwirtschaftlichen Guts (G) auf einem Boden (B), umfassend:
• einen Kopplungsrahmen (110), welcher zur Koppelung an ein landwirtschaftliches Trägerfahrzeug (300) konfiguriert ist,
• einen Montagerahmen (120), welcher zur Montage an das Arbeitsgerät (200) konfiguriert ist,
wobei der Kopplungsrahmen (110) und der Montagerahmen (120) mittels einer Lagereinrichtung (130) relativ zueinander beweglich gekoppelt sind, und
wobei die Tragstruktur (100) eine Verstelleinrichtung (140) umfasst, welche zur Einstellung einer definierten Lage des Montagerahmens (120) zu dem Kopplungsrahmen (110) und/oder zu dem Boden (B) in Abhängigkeit von zumindest einem Parameter betätigbar konfiguriert ist.

2. Tragstruktur (100) nach Anspruch 1,
wobei die definierte Lage eine Ausrichtung des Montagerahmens (120), vorzugsweise des Arbeitsgeräts (200) in einem Montagezustand, zu dem Kopplungsrahmen (120) und/oder zu dem Boden (B) umfasst, um vorzugsweise eine horizontale Ausrichtung einer resultierenden Ausbringungsebene (E) des Guts (G) an dem Arbeitsgerät (200) einzustellen.

3. Tragstruktur (100) nach Anspruch 1 oder 2,
wobei der zumindest eine Parameter ein erfasster, vorzugsweise gemessener, und/oder ein berechneter Parameter ist, vorzugsweise in einem Betriebszustand des Arbeitsgeräts (200), und
wobei der zumindest eine Parameter zumindest einen von folgenden umfasst:
• eine Ist-Lage, vorzugsweise eine Ist-Neigung, des Montagerahmens (120) und/oder des Arbeitsgeräts (200) zu dem Kopplungsrahmen (110) und/oder zu dem Boden (B) und/oder zu einer Horizontalen;
• ein Ist-Abstand des Montagerahmens (120) und/oder des Arbeitsgeräts (200) zu dem Boden (B);
• eine Beschleunigung zumindest einer Referenzstelle an dem Montagerahmen (120) und/oder an dem Arbeitsgerät (200);
• ein Betätigungszustand und/oder eine zeitliche Änderung des Betätigungszustands der Verstelleinrichtung (140);
• eine Lage eines resultierenden Schwerpunkts des Arbeitsgeräts (200), vorzugsweise einer Ballastierung eines Vorratsbehälters (230) des Arbeitsgeräts (200) für das landwirtschaftliche Gut (G); und/oder
• einen durch zumindest eine Sensoreinrichtung (400) erfassten und/oder berechneten Parameter der Verstelleinrichtung (140), vorzugsweise umfassend einen Druck, eine Kraft und/oder einen Weg,
wobei die zumindest eine Sensoreinrichtung (400) in Wirkverbindung mit der Verstelleinrichtung (140) steht.

4. Tragstruktur (100) nach einem der vorhergehenden Ansprüche,
wobei die Tragstruktur (100) zur Erfassung und/oder Berechnung des zumindest einen Parameters zumindest eine von folgenden Sensoreinrichtungen (400) umfasst:
• einen Beschleunigungssensor;
• einen Drehratensensor;
• einen Abstandssensor;
• einen Gewichtssensor; und/oder
• einen Lagesensor.

5. Tragstruktur (100) nach einem der vorhergehenden Ansprüche,
wobei die Verstelleinrichtung (140) und der Montagerahmen (120) relativ zueinander beweglich gekoppelt, vorzugsweise gelenkig gekoppelt, sind, und/oder
wobei die Verstelleinrichtung (140) und der Kopplungsrahmen (110) relativ zueinander beweglich gekoppelt, vorzugsweise gelenkig gekoppelt, sind, und/oder
wobei in einer Untersicht auf die Tragstruktur (100) die Verstelleinrichtung (140) zwischen dem Kopplungsrahmen (110) und dem Montagerahmen (120) angeordnet ist.

6. Tragstruktur (100) nach einem der vorhergehenden Ansprüche,
wobei der Montagerahmen (120) mittels der Lagereinrichtung (130) an dem Kopplungsrahmen (110) um eine Schwenkachse (X) schwenkbeweglich gelagert ist, vorzugweise mittels eines Lagerbolzens (131) und/oder in einem definierten Schwenkwinkelbereich; und/oder
wobei in einer Untersicht auf die Tragstruktur (100) eine Richtung einer Schwenkachse (X) der Lagereinrichtung (130) und eine Betätigungsrichtung (Y) der Verstelleinrichtung (140) zueinander senkrecht angeordnet sind.

7. Tragstruktur (100) nach einem der vorhergehenden Ansprüche,
wobei die Lagereinrichtung (130) an der Tragstruktur (100) zu der Verstelleinrichtung (140) gegenüberliegend und/oder zu der Verstelleinrichtung (140) beabstandet angeordnet ist.

8. Tragstruktur (100) nach einem der vorhergehenden Ansprüche,
wobei der Montagerahmen (120) mittels zumindest einer Rolleinrichtung (126) an dem Kopplungsrahmen (110) abrollbar, vorzugsweise unter Ausbildung eines bogenförmigen Rollbahnabschnitts, gelagert und/oder abgestützt ist.

9. Tragstruktur (100) nach einem der vorhergehenden Ansprüche,
wobei der Kopplungsrahmen (110) zur schwenkbaren Lagerung des Montagerahmens (120) innerhalb eines definierten Winkelbereichs zumindest einen ersten Anschlag und zumindest einen zweiten Anschlag ausbildet, vorzugsweise für zumindest eine Rolleinrichtung (126) an dem Montagerahmen (120).

10. Tragstruktur (100) nach einem der vorhergehenden Ansprüche,
wobei die Verstelleinrichtung (140) in zumindest einer Betätigungsrichtung (Y) als formvariabler Aktuator ausgebildet ist oder einen formvariablen Aktuator umfasst, und/oder
wobei die Verstelleinrichtung (140) elektrisch, mechanisch, elektromechanisch, hydraulisch und/oder pneumatisch betätigbar konfiguriert ist,
wobei vorzugsweise die Verstelleinrichtung (140) konfiguriert ist, den Montagerahmen (120) mit einer Verstellkraft in zwei zueinander entgegengesetzten Richtungen zu beaufschlagen.

11. Tragstruktur (100) nach einem der vorhergehenden Ansprüche,
wobei in einer Frontansicht auf die Tragstruktur (100) der Kopplungsrahmen (110) und der Montagerahmen (120) jeweils durch eine dreieckförmige Außenkontur (K110, K120) gekennzeichnet sind und/oder zumindest abschnittsweise zueinander ähnlich ausgebildet sind.

12. Landwirtschaftliches Arbeitsgerät (200) mit einer Tragstruktur (100) gemäß einem der vorhergehenden Ansprüche, wobei das Arbeitsgerät (200) zur Ausbringung eines landwirtschaftlichen Guts (G) auf einen Boden (B) konfiguriert ist,
wobei vorzugsweise das Arbeitsgerät (100) als Schleuderstreuer oder als Feldspritze ausgebildet ist.

13. Verfahren zum Ausbringen eines landwirtschaftlichen Guts (G) auf einem Boden (B) mittels einem landwirtschaftlichen Arbeitsgerät (200), wobei das Arbeitsgerät (200) an einen Montagerahmen (120) einer Tragstruktur (100) montiert ist und ein Kopplungsrahmen (110) der Tragstruktur (100) an ein landwirtschaftliches Trägerfahrzeug (300) gekoppelt ist,
wobei vorzugsweise die Tragstruktur (100) nach einem der vorhergehenden Ansprüche 1 bis 11 konfiguriert ist, und/oder wobei das Arbeitsgerät (200) vorzugsweise nach Anspruch 12 konfiguriert ist;
wobei der Kopplungsrahmen (110) und der Montagerahmen (120) mittels einer Lagereinrichtung (130) relativ zueinander beweglich gekoppelt sind,
wobei, vorzugsweise mittels zumindest einer Sensoreinrichtung (400), zumindest ein Parameter erfasst und/oder berechnet wird, und
wobei, vorzugsweise mittels einer Automatisierungseinrichtung (330), in Abhängigkeit des erfassten und/oder berechneten zumindest einen Parameters eine definierte Lage des Montagerahmens (120) zu dem Kopplungsrahmen (110) und/oder zu dem Boden (B) durch Steuern und/oder Regeln einer Verstelleinrichtung (140) der Tragstruktur (100), welche betätigbar konfiguriert ist, eingestellt wird.

14. Verfahren nach Anspruch 13,
wobei infolge des Steuerns und/oder Regelns der Verstelleinrichtung (140) der Montagerahmen (120) an dem Kopplungsrahmen (110) von einer Ist-Lage in die definierte Lage um eine Schwenkachse (X) schwenkt; und/oder
wobei sich infolge des Betätigens der Verstelleinrichtung (140) durch das Steuern und/oder Regeln eine Lage, vorzugsweise eine Ausrichtung, der Verstelleinrichtung (140) zu dem Kopplungsrahmen (110) und/oder zu dem Montagerahmen (120) ändert.

15. Verfahren nach Anspruch 13 oder 14,
wobei das Einstellen der definierten Lage ein Ausrichten des Montagerahmens (120), vorzugsweise des Arbeitsgeräts (200), zu dem Kopplungsrahmen (110) und/oder zu dem Boden (B) umfasst, um vorzugsweise eine horizontale Lage einer resultierenden Ausbringungsebene (E) des Guts (G) an dem Arbeitsgerät (200) einzustellen.
